Europäisches Patentamt

European Patent Office

Office européen des brevets

(19)

(11) Numéro de publication: **0 288 349**
**B1**

## (12) FASCICULE DE BREVET EUROPEEN

(45) Date de publication du fascicule du brevet:
**19.09.90**

(21) Numéro de dépôt: **88400731.1**

(22) Date de dépôt: **25.03.88**

(51) Int. Cl.⁵: **B60T 13/14**

(54) **Dispositif d'assistance hydraulique pour circuit de freinage.**

(30) Priorité: **31.03.87  FR 8704471**

(43) Date de publication de la demande:
**26.10.88 Bulletin 88/43**

(45) Mention de la délivrance du brevet:
**19.09.90 Bulletin 90/38**

(84) Etats contractants désignés:
**DE ES FR GB IT**

(56) Documents cités:
**EP-A- 0 210 096**
**DE-A- 2 360 140**
**FR-A- 2 290 334**
**GB-A- 2 074 274**

(73) Titulaire: **BENDIX France Société Anonyme dite:,
126, rue de Stalingrad, F-93700 Drancy(FR)**

(72) Inventeur: **Douillet, Christian, 5, rue Lavoisier,
F-92800 Puteaux(FR)**
Inventeur: **Vasselet, Joel, 38 Bis, Boulevard Chilpéric,
F-77500 Chelles(FR)**

(74) Mandataire: **Brullé, Jean et al, Division Technique
Service Brevets Bendix Europe 126, rue de Stalingrad,
F-93700 Drancy(FR)**

# Description

La présente invention est relative à un dispositif d'assistance hydraulique et, plus particulièrement, à un tel dispositif conçu pour un circuit de freinage à fonctionnement mixte hydrodynamique et hydrostatique.

La demande de brevet français n° 2 584 356 au nom de la demanderesse est relative à un dispositif d'assistance hydraulique comprenant un corps pourvu d'un alésage dans lequel est monté coulissant un moyen de piston déplaçable sous l'effet de l'actionnement d'une pédale de freinage entre une première position faisant communiquer une première chambre reliée à une circuit de freinage, à un réservoir basse pression et isolant cette chambre d'une source de fluide haute pression, et une deuxième position isolant la chambre du réservoir basse pression et la faisant communiquer avec la source haute pression. Le moyen de piston est déplaçable sous l'effet de l'actionnement de la pédale de freinage lors d'une défaillance du circuit haute pression, pour engendrer une pression dans une deuxième chambre reliée au circuit de freinage. La surface de travail du moyen de piston est égale à la section dudit alésage, ce qui permet de déplacer un volume utile important de fluide de freinage, en cas de défaillance du circuit haute pression.

Dans le dispositif d'assistance hydraulique de la demande de brevet français précitée, le moyen de piston est couplé à un poussoir relié à la pédale de frein par un ressort de compression placé dans une troisième chambre reliée au réservoir basse pression. En cas de défaillance de la source de fluide haute pression, cette troisième chambre est isolée du circuit de freinage et, par conséquent, le fluide déplacé dans cette chambre par le poussoir s'évacue dans le réservoir basse pression. Ce volume de fluide est donc perdu pour le circuit de freinage. Une telle situation est acceptable quand le volume utile de fluide est suffisant pour assurer un freinage correct d'un véhicule d'un poids donné. Pour un véhicule plus lourd, on peut souhaiter renforcer l'efficacité du freinage en cas de défaillance de la source de fluide haute pression, par augmentation du volume utile de fluide de freinage sans accroissement de l'encombrement du dispositif d'assistance hydraulique.

La présente invention a pour but de réaliser un dispositif d'assistance hydraulique du type décrit ci-dessus et perfectionné en ce que le volume utile de fluide de freinage, en cas de défaillance de la source de fluide haute pression, est accru sans accroissement de l'encombrement du dispositif d'assistance hydraulique.

On atteint ce but de l'invention avec un dispositif d'assistance hydraulique pour circuit de freinage, comprenant un corps percé d'un alésage dans lequel coulissent coaxialement un poussoir commandé par une pédale de frein et un moyen de piston placé entre des première et deuxième chambres contenant un fluide de freinage, la première chambre recevant un ressort qui charge le poussoir et le moyen de piston à l'écart l'un de l'autre, les première et deuxième chambres étant raccordées à des sources de fluide basse pression et haute pression, respectivement, par des premier et des deuxième moyens de valve, respectivement, des troisième et quatrième moyens de valve étant interposés entre les première et deuxième chambres respectivement, et un circuit de freinage, dispositif caractérisé en ce que la source haute pression commande l'ouverture des premier et deuxième moyens de valve, ces moyens se fermant en cas de défaillance de cette source pour isoler la première chambre de la source basse pression et la deuxième chambre de la source haute pression, la deuxième chambre se vidant alors, en cas de freinage, dans le circuit de freinage sous l'action du moyen de piston déplacé par la translation du poussoir transmise à ce moyen par le ressort et en ce que le troisième moyen de valve s'ouvre une fois la deuxième chambre vidée pour permettre l'injection dans le circuit de freinage d'un volume de liquide de freinage chassé de la première chambre par la poursuite du déplacement du poussoir sous l'action de la pédale de frein.

Au dessin annexé, donné seulement à titre d'exemple :

- la figure 1 est une vue en coupe axiale du dispositif d'assistance hydraulique suivant l'invention, les divers organes de ce dispositif étant agencés dans des positions qu'ils occupent lors d'un freinage normal, et
- la figure 2 est une vue, analogue à celle de la figure 1, qui représente les organes du dispositif suivant l'invention dans des positions qu'ils occupent lors d'un freinage en présence d'une défaillance de la source de fluide haute pression.

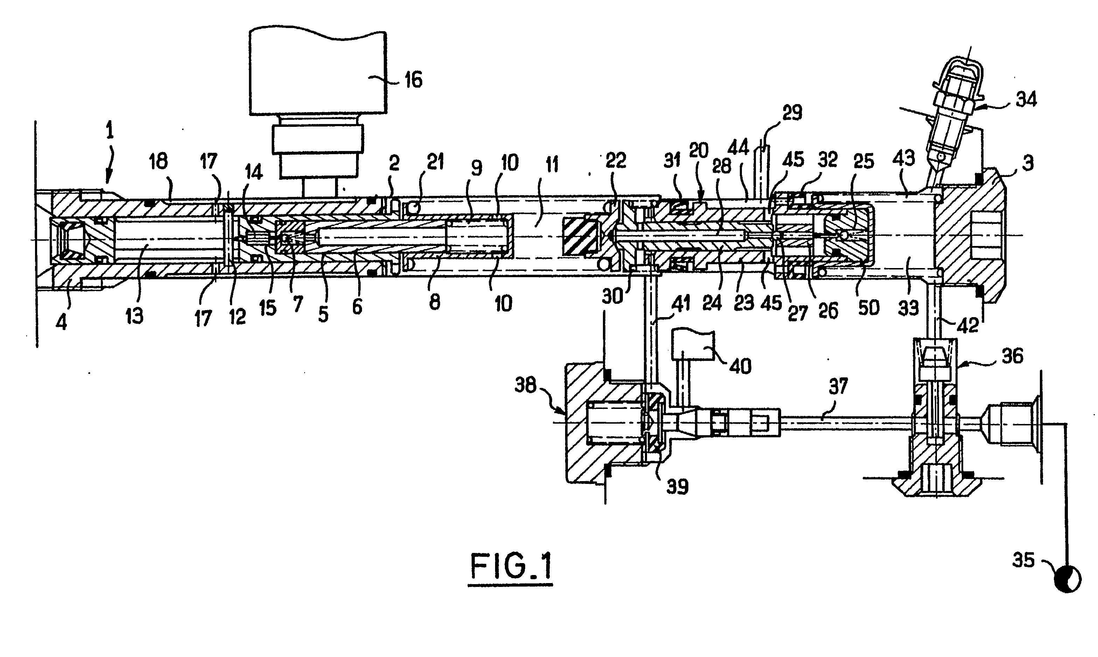

On se réfère à la figure 1 où il apparaît que le dispositif d'assistance hydraulique pour système de freinage suivant l'invention comprend un corps 1 comportant un alésage principal 2 obturé à une extrémité par un embout de fermeture 3. A l'autre extrémité du corps 1 est montée fixe une fourrure 4 dans laquelle est monté à coulissement étanche un poussoir 5 destiné à être relié à une pédale de freinage (non représentée). Le poussoir 5 comprend un conduit coaxial 6 fermé à son extrémité intérieure au poussoir par un moyen de valve tel qu'un clapet 7 à bille et ressort. L'autre extrémité du conduit est surmontée d'un capot 8 qui enferme un ressort 9 fonctionnant en compression entre le fond de ce capot et l'extrémité du conduit 6. Le capot 8 est percé d'ouvertures 10 qui font communiquer l'intérieur du capot avec une première chambre 11 de l'alésage 2. Une goupille 12 solidaire de la fourrure 4 passe dans une boutonnière axiale 13 creusée dans la partie du poussoir 5 qui se trouve à gauche sur la figure 1. Un noyau à aiguilles 14 est mobile dans un logement axial 15 du poussoir, ce noyau étant solidaire de deux aiguilles axiales agencées pour coopérer respectivement avec la goupille 12 et avec la bille du clapet 7. Au repos, aucune action n'étant exercée sur la pédale de frein, le poussoir 5 se trouve dans sa position la plus à gauche, du point de vue de la figure et, dans ce cas, la goupille 12 agit sur le noyau à aiguilles 14 de manière que celui-ci ouvre le clapet à bille 7 pour établir une communication entre la première chambre 11 et un réservoir de fluide de freinage de basse pression 16 par l'intermédiaire du conduit 6, du clapet à bille 7, de canaux 17 percés dans la fourrure 4 et d'une chambre annulaire 18 placée entre la fourrure 4 et la paroi de l'alésage 2, pour communiquer avec le réservoir 16.

Dès que l'on exerce une pression sur la pédale de frein, le poussoir 5 se déplace vers la droite et le noyau à aiguilles 14 s'écarte alors de la goupille 12 ce qui a pour effet de permettre la fermeture du clapet à bille 7 sous la pression du ressort qui charge la bille, du fait que l'aiguille associée du noyau 14 n'exerce plus de pression sur cette bille. La communication entre la première chambre 11 et le réservoir de fluide de freinage basse pression 16 est alors coupée.

Le poussoir 5 est couplé à un moyen de piston 20 par l'intermédiaire d'un ressort 21 fonctionnant en compression. Ce ressort 21 est placé dans la première chambre 11 et s'appuie par ses extrémités respectivement sur la base du capot 8 associé au poussoir 5 et sur une butée 22 qui s'appuit coaxialement sur le moyen de piston 20. Le moyen de piston 20 comprend essentiellement une chemise 23 dans laquelle coulisse un tiroir 24. La chemise 23 est fermée à son extrémité droite (du point de vue de la figure 1) par un moyen de valve tel qu'un clapet 25 à bille et ressort. La chemise reçoit encore un noyau à aiguille 26 coaxial mobile dans un compartiment de la chemise disposé entre le clapet à bille et l'extrémité droite du tiroir 24 (du point de vue de la Fig. 1). Ce noyau 26 porte une aiguille dans l'axe de l'alésage 2, cette aiguille étant susceptible de repousser la bille du clapet 25 contre l'action d'un ressort qui charge cette bille vers une position de fermeture du clapet. Le noyau à aiguille porte encore un moyen de valve tel qu'une bille 27 qui peut venir obturer l'extrémité d'un canal 28 percé dans le tiroir 24 pour faire communiquer la chambre 11 avec un circuit de freinage schématiquement représenté en 29, comme on l'expliquera plus en détail dans la suite. Un ressort 30 tend à faire sortir le tiroir 24 de la chemise 23. Des coupelles en caoutchouc 31 et 32 sont installées entre la chemise 23 et la paroi de l'alésage 2.

L'extrémité droite (du point de vue de la figure 1) du moyen de piston 20 est mobile dans une deuxième chambre de fluide de freinage 33, limitée dans l'alésage 2 entre cette extrémité et l'embout de fermeture 3. Une vis de purge 34 donne accès à cette chambre 33.

Un ressort 43 placé dans la chambre 33 tend à écarter le moyen de piston 20 de l'embout 3. Les raideurs des ressorts 43,30,21 et 9 croissent dans cet ordre et, dans un mode de réalisation particulier de l'invention, sont approximativement égales respectivement à 0,36 ; 0,4 ; 2,3 et 6 kgf/mm.

Une source de fluide de freinage haute pression, schématiquement représentée en 35, alimente la chambre 33 par l'intermédiaire d'un moyen de valve tel qu'un clapet anti-retour 36. Cette source 35 est aussi connectée par un conduit 37 à un moyen de valve constitué par une soupape 38. Cette soupape comprend une tête 39 dont la position d'ouverture ou de fermeture est commandée par la source de haute pression 35. Quand la source de haute pression 35 fonctionne normalement, cette tête de soupape laisse libre une communication entre un réservoir de fluide de freinage basse pression 40 et la première chambre 11 par l'intermédiaire d'un conduit 41. En cas de défaillance de la source haute pression 35, la tête de soupape 39 se ferme sur son siège et la communication entre le réservoir basse pression 40 et la chambre 11 est coupée.

De même, lorsque la source de fluide haute pression 35 fonctionne normalement, le clapet anti-retour 36 est soulevé de son siège par la pression du fluide venu de la source 35 et ce fluide peut alors pénétrer par l'intermédiaire d'un conduit 42 dans la deuxième chambre 33. En cas de défaillance de la source 35, le clapet anti-retour retombe sur son siège et cette communication est coupée.

Le dispositif suivant l'invention comprend ainsi des premier, deuxième, troisième, quatrième et cinquième moyens de valve constitués par les organes référencés 38, 36, 27, 25 et 7, respectivement.

On décrira maintenant le fonctionnement du dispositif d'assistance hydraulique suivant l'invention lors d'un freinage alors que la source de fluide de freinage haute pression fonctionne normalement. Le conducteur ayant appuyé sur la pédale de frein, le poussoir 5 se déplace vers la droite (du point de vue de la figure 1) ce qui a pour effet d'écarter le noyau à aiguille 14 de la goupille 12, pour supprimer ainsi la pression exercée par ce noyau sur la bille du clapet 7 qui se ferme alors pour couper toute communication entre la première chambre 11 et le réservoir 16. La soupape 38 étant alors ouverte, la pression du fluide contenu dans la première chambre 11 est égale à celle du fluide dans le réservoir basse pression 40 communiquant avec cette chambre. On notera à cette occasion que les deux réservoirs 16 et 40 pourraient ne faire qu'un grâce à un conduit connecté entre la soupape 38 à la place du réservoir 40, et le réservoir 16.

Le déplacement vers la droite du poussoir 5 est transmis au moyen de piston 20 par le ressort 21. Sous la poussée ainsi reçue par la butée 22, le tiroir 24 se déplace également vers la droite en repoussant la bille 27 et le noyau à aiguille qui écarte alors la bille du clapet 25 de son siège en établissant ainsi une communication entre la chambre 33 pleine de fluide à haute pression et le circuit de freinage 29. Le fluide haute pression de la chambre 33 peut en effet passer dans le circuit de freinage 29 en traversant le clapet 25, en passant autour du noyau à aiguille 26 et en pénétrant par des conduits 45 dans une chambre annulaire 44 entourant la chemise 23 et reliée au circuit 29. Le dispositif d'assistance hydraulique suivant l'invention commande ainsi l'admission d'un fluide de freinage à haute pression dans le circuit de freinage 29 pour assurer un freinage assisté du véhicule, suivant un mode de fonctionnement normal. On notera que le fluide haute pression exerce alors une réaction sur le tiroir 24, réaction à laquelle s'opposent les ressorts 9 et 21 dont l'action assure une bonne "sensation pédale" au conducteur.

Lors d'un défreinage, il y a relâchement de l'effort sur le poussoir 5, ce qui permet au moyen de piston 20 de revenir vers la gauche. Le clapet 25 se referme alors tandis que le canal 28 se débouche du fait que la bille 27 s'écarte de l'extrémité de ce canal. Le fluide sous pression dans le compartiment du noyau à aiguille 26 est ainsi libre de passer dans le canal 28 et la chambre 11 pour revenir dans le réservoir basse pression 40. Si l'effort au relâchement de la pédale de freinage se stabilise, la bille 27 referme le canal 28 sous l'action des divers ressorts et crée une pression correspondante dans le circuit de freinage 29 du véhicule.

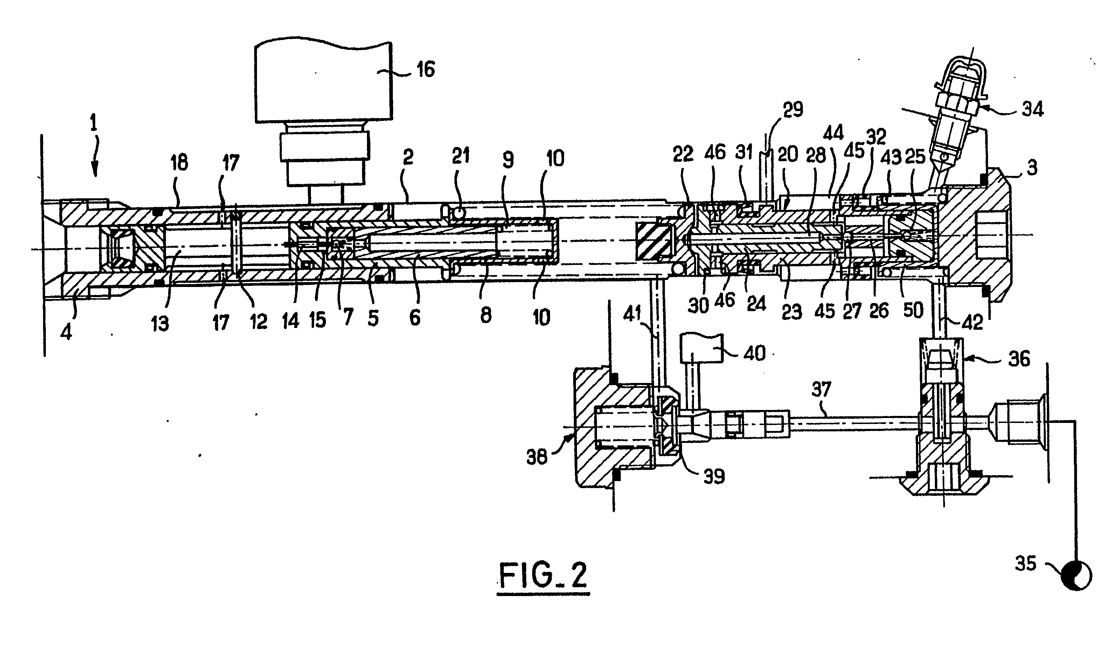

On se réfère maintenant à la figure 2 pour expliquer le fonctionnement du dispositif d'assistance suivant l'invention, en cas de défaillance de la source de fluide haute pression 35. Dans cette hypothèse, la pression tombant à la sortie de cette source, le clapet anti-retour 36 se ferme pour isoler ainsi la deuxième chambre 33 de la source haute pression. Simultanément la soupape 38 se ferme aussi du fait de la baisse de pression dans le conduit 37. La communication de la chambre 11 avec le réservoir basse pression 40 est ainsi coupée.

Dans ces conditions, si le conducteur appuie sur la pédale de frein, la translation du poussoir 5 vers la droite qui s'ensuit à pour effet de fermer le clapet à bille 7 et d'ouvrir le clapet à bille 25, comme en fonctionnement normal. Du fait de la suppression de la haute pression dans la chambre 33, la translation du poussoir 5 vers la droite va être transmise intégralement par le ressort 21 au moyen de piston 20, qui va comprimer le ressort 43 contenu dans la chambre 33 jusqu'à ce qu'un capot 50 du clapet à bille 25 vienne en butée sur l'embout de fermeture 3. Le liquide ainsi déplacé dans la chambre 33 par la pénétration du piston 20 s'échappe par le clapet à bille 25, ouvert, vers le circuit de freinage 29 en passant autour du noyau 26 pour pénétrer ensuite dans la chambre annulaire 44 par les conduits 45. Le volume de fluide ainsi déplacé constitue une partie du volume utile qui va servir à faire croître la pression dans un circuit de freinage malgré la défaillance de la source de liquide haute pression.

Suivant une caractéristique essentielle du dispositif d'assistance hydraulique de la présente invention, on accroît le volume de fluide utile à l'accroissement de la pression dans le circuit de freinage 29, en cas de défaillance de la source haute pression 35, en autorisant un transfert de fluide de la première chambre 11 vers ce circuit, alors même que le moyen de piston 20 est en butée sur l'embout 3. En effet, le conducteur continuant à exercer une pression sur la pédale de frein, la translation vers la droite du poussoir 5 se poursuit contre l'action du ressort 21 en déplaçant ainsi du fluide dans la chambre 11, fluide qui ne peut rejoindre les réservoirs basse pression 16, 40 du fait de la fermeture du clapet 7 et de la soupape 38. Par contre ce fluide peut rejoindre le circuit de freinage 29 en traversant des conduits 46 percés dans la chemise 23 et le canal 28 creusé dans le tiroir 24, la bille 27 n'obturant plus l'extrémité de ce canal. En outre, le fluide sous pression de la chambre 11 peut passer aussi entre la chemise 23 et l'alésage 2 pour faire fléchir la lèvre de la coupelle 31 et pénétrer ainsi dans le circuit de freinage par cet autre passage. Ce transfert de fluide de la chambre 11 vers le circuit de freinage 29 peut se poursuivre jusqu'à ce que le capot 8 du poussoir 5 vienne s'appuyer sur la butée 22 du moyen de piston 20.

Ainsi, grâce à l'invention, en cas de défaillance de la source haute pression 35, le volume de fluide utile à l'accroissement de la pression dans le circuit de freinage qui résulte du vidage de la chambre 33 sous l'action du moyen de piston 20, s'accroît d'un volume substantiel de fluide venu de la chambre 11. On atteint ce résultat bénéfique pour la sûreté du freinage en cas de défaillance de la source haute pression, en isolant le volume de fluide contenu dans la chambre 11 du ou des réservoirs basse pression, par la fermeture des moyens de valve 7 et 38 et en établissant une communication entre la chambre 11 et le circuit de freinage, alors que l'isolement de la chambre 33 par rapport à la source 35 défaillante est assuré par la fermeture du clapet 36.

## Revendications

1. Dispositif d'assistance hydraulique pour circuit de freinage, comprenant un corps percé d'un alésage dans lequel coulissent coaxialement un poussoir commandé par une pédale de frein et un moyen de piston placé entre des première et deuxième chambres contenant un fluide de freinage, la première chambre recevant un ressort qui charge le poussoir et le moyen de piston à l'écart l'un de l'autre, les première et deuxième chambres étant raccordées à des sources de fluide basse pression et haute pression, respectivement, par des premier et des deuxième moyens de valve respectivement, des troisième et quatrième moyens de valve étant interposés entre les première et deuxième chambres respectivement, et un circuit de freinage, dispositif caractérisé en ce que la source haute pression commande l'ouverture des premier (38) et deuxième (36) moyens de valve, ces moyens se fermant en cas de défaillance de cette source pour isoler la première chambre de la source basse pression et la deuxième chambre de la source haute pression, la deuxième chambre (33) se vidant alors, en cas de freinage, dans le circuit de freinage sous l'action du moyen de pistion (20) déplacé par la translation du poussoir (5) transmise à ce moyen par le ressort (21) et en ce que le troisième moyen de valve (27) s'ouvre une fois la deuxième chambre vidée pour permettre l'injection dans le circuit de freinage d'un volume de liquide de freinage chassé de la première chambre (11) par la poursuite du déplacement du poussoir sous l'action de la pédale de frein.

2. Dispositif conforme à la revendication 1, caractérisé en ce qu'il comprend un cinquième moyen de valve (7) qui coopère avec le premier moyen de valve (38) pour isoler la première chambre (11) de la source de fluide basse pression lors d'un freinage en présence d'une défaillance de la source haute pression, ce cinquième moyen de valve commandant une communication (6,17) à travers le poussoir (5), entre la première chambre et la source basse pression (16), communication qui est ouverte en l'absence d'action sur la pédale de frein.

3. Dispositif conforme à la revendication 2, caractérisé en ce que les quatrième (25) et cinquième (7) moyens de valve sont constitués par des clapets à bille commandés par des aiguilles, ces clapets étant montés dans le moyen de piston et dans le poussoir respectivement, une pression sur la pédale de frein ouvrant le clapet (25) et fermant le clapet (7).

4. Dispositif conforme à la revendication 3, caractérisé en ce que le clapet (7) est ouvert en l'absence de pression sur la pédale de frein par une aiguille qui porte alors sur une goupille fixe (12), l'autre extrémité de l'aiguille écartant la bille du clapet (7) de son siège.

5. Dispositif conforme à l'une quelconque des revendications précédentes, caractérisé en ce que le troisième moyen de valve est constitué par une bille (27) montée sur un noyau mobile (26) entre une première position où cette bille obture un canal (28) percé dans un tiroir (24) mobile dans une chemise (23) formant partie du moyen de piston (20), ce canal faisant communiquer sélectivement le circuit de freinage (29) et la première chambre (11), et une deuxième position où cette bille est écartée du conduit pour autoriser le passage d'une partie du liquide de la première chambre (11) dans le circuit de freinage (29) lors d'un freinage en présence d'une défaillance de la source haute pression.

6. Dispositif conforme à l'une quelconque des revendications précédentes, caractérisé en ce que le moyen de piston (20) porte une coupelle annulaire (31) formant joint dans l'alésage du corps, cette coupelle autorisant le passage de fluide entre la paroi de l'alésage et la coupelle, quand du fluide est chassé de la chambre (11) pour passer dans le circuit de freinage (29) lors d'un freinage en présence d'une défaillance de la source de haute pression, ce transfert de fluide s'ajoutant alors à celui déterminé par l'ouverture du troisième moyen de valve (27).

7. Dispositif conforme à l'une quelconque des revendications précédentes, caractérisé en ce que le deuxième moyen de valve est un clapet anti-retour (36) orienté de manière à empêcher un retour du fluide contenu dans la deuxième chambre vers la source de haute pression.

8. Dispositif conforme à l'une quelconque des revendications précédentes, caractérisé en ce que le premier moyen de valve est constitué par une soupape (38) commandant une communication entre la première chambre (11) et une source de liquide basse pression (40), cette soupape se fermant en cas de défaillance de la source de fluide haute pression.

9. Dispositif conforme à l'une quelconque des revendications précédentes, caractérisé en ce qu'un ressort (43) fonctionnant en compression est placé dans la deuxième chambre (33), le ressort (43) s'opposant à l'action du ressort (21) sur le moyen de piston et le ressort (21) présentant une raideur supérieure à celle du ressort (43).

10. Dispositif conforme à l'une quelconque des revendications précédentes, caractérisé en ce qu'un ressort (30) fonctionnant en compression tend à faire sortir le tiroir (24) de la chemise (23) formant partie du moyen de piston (20).

11. Dispositif conforme à l'une quelconque des revendications 9 et 10, caractérisé en ce que l'extrémité du poussoir (5) est surmontée d'un capot (8) sur lequel s'appuie une base du ressort (21), un ressort (9) de raideur supérieure à celle du ressort (21) étant placé dans ce capot pour charger le capot à l'écart de l'extrémité du poussoir (5).

## Claims

1. Hydraulic booster device for braking circuit, comprising a body drilled with a bore in which slide coaxially a plunger controlled by a brake pedal and a piston means located between the first and second chambers containing a brake fluid, the first chamber having a spring which maintains the plunger and the piston means separated one from the other, the first and second chambers being connected respectively to sources of low pressure and high pressure fluid, by the first and second valve means respectively, the third and the fourth valve means being interposed respectively between the first and second chambers, and a braking circuit, device characterized in that the high pressure source controls the opening of the first (38) and second (36) valve means, these means closing themselves in the event of failure of this source to isolate the first chamber from the low pressure source and the second chamber from the high pressure source, the second chamber (33) then emptying, in the event of braking, into the braking circuit due to the action of the piston means (20) displaced by, the translation of the* plunger (5) transmitted to this medium by the spring (21) and in that the third valve means (27) opens once the second chamber is empty to permit the injection into the braking circuit of a volume of brake fluid expelled from the first chamber (11) by the continuation of movement of the plunger due to the action of the brake pedal.

2. Device according to Claim 1, characterized in that it comprises a fifth valve means (7) which interacts with the first valve means (38) to isolate the first chamber (11) from the source of low pressure fluid during a braking in the presence of a failure of the high pressure source, this fifth valve means controlling a communication (6, 17) through the plunger (5), between the first chamber and the low pressure source (16), communication which is open in the absence of action on the brake pedal.

3. Device according to Claim 2, characterized in that the fourth (25) and fifth (7) valve means are formed by ball valves controlled by needles, these valves being mounted respectively in the piston means and in the plunger, a pressure on the brake pedal opening the valve (25) and closing the valve (7).

4. Device according to Claim 3, characterized in that the valve (7) is open in the absence of pressure on the brake pedal by a needle which then rests against a fixed pin (12), the other end of the needle lifting the ball of the valve (7) from its seat.

5. Device according to any one of the preceding claims, characterized in that the third valve means is formed by a ball (27) mounted on a movable core (26) between a first position where this ball blanks off a channel (28) drilled in a slide valve (24) movable in a sleeve (23) forming part of the piston means (20), this channel making the braking circuit , (29) and the first chamber (11) communicate selectively, and a second position where this ball is lifted from the passage to authorize the passage of a part of the fluid from the first chamber (11) into the braking circuit (29) during a braking in the presence of a failure of the high pressure source.

6. Device according to any one of the preceding claims, characterized in that the piston means (20) has an annular cup (31) forming seal in the bore of the body, this cup authorizing the passage of fluid between the wall of the bore and the cup, when fluid is expelled from the chamber (11) to pass into the braking circuit (29) during a braking in presence of a failure of the high pressure source, this transfer of fluid then adding itself to that determined by the opening of the third valve means (27).

7. Device according to any one of the preceding claims, characterized in that the second valve means is an anti-return valve (36) directed so as to prevent a return of the fluid contained in the second chamber to the high pressure source.

8. Device according to any one of the preceding claims, characterized in that the first valve means is formed by a valve (38) controlling a communication between the first chamber (11) and a source of low pressure fluid (40), this valve closing in the event of failure of the source of high pressure fluid.

9. Device according to any one of the preceding claims, characterized in that a spring (43) working in compression is located in the second chamber (33), the spring (43) opposing the action of the spring (21) on the piston means and the spring (21) having a greater stiffness than that of the spring (43).

10. Device according to any one of the preceding claims, characterized in that a spring (30) working in compression tends to make the slide valve (24) come out of the sleeve (23) forming part of the piston means (20).

11. Device according to any one of the preceding claims 9 and 10, characterized in that the end of the plunger (5) is covered by a cap (8) on which a bottom of a spring (21) rests, a spring (9) of greater stiffness to that of the spring (21) being located in this cap to load the cap apart from the end of the plunger (53.

**Patentansprüche**

1. Hydraulische Hilfsvorrichtung für Bremskreis, mit einem Körper, der von einer Bohrung durchquert ist, in der ein von einem Bremspedal gesteuerter Stößel und ein Kolbenmittel, das zwischen einer ersten und einer zweiten, eine Bremsflüssigkeit enthaltenden Kammer angebracht ist, koaxial gleiten, wobei die erste Kammer eine Feder aufnimmt, die den Stößel und das Kolbenmittel voneinander fort belastet, und die erste Kammer an eine Niederdruckflüssigkeitsquelle und die zweite Kammer an eine Hochdruckflüssigkeitsquelle über ein erstes beziehungsweise ein zweites Ventilmittel angeschlossen ist, und ein drittes Ventilmittel zwischen der ersten Kammer und dem Bremskreis sowie ein viertes Ventilmittel zwischen der zweiten Kammer und dem Bremskreis eingefügt ist, wobei die Vorrichtung dadurch gekennzeichnet ist, daß die Hochdruckquelle die Öffnung des ersten (38) und des zweiten (36) Ventilmittels steuert, wobei sich diese Mittel bei Ausfall dieser Quelle schließen, um die erste Kammer von der Niederdruckquelle und die zweite Kammer von der Hochdruckquelle abzutrennen, wobei sich dann die zweite Kammer (33) bei einer Bremsung in den Bremskreis unter Einwirkung des Kolbenmittels (20) entleert, das durch die Translation des Stößels (5) bewegt wird, die durch die Feder (21) auf dieses Mittel übertragen wird, und dadurch, daß sich das dritte Ventilmittel (27) öffnet, sobald die zweite Kammer entleert ist, um die Einspeisung eines Bremsflüssigkeitsvolumens in den Bremskreis zu gestatten, das aus der ersten Kammer (11) durch die Weiterbewegung des Stößels unter der Einwirkung des Bremspedals ausgestoßen wird.

2. Vorrichtung nach Anspruch 1, dadurch gekennzeichnet, daß sie ein fünftes Ventilmittel (7) umfaßt, das mit dem ersten Ventilmittel (38) zusammenwirkt, um die erste Kammer (11) von der Niederdruck-Flüssigkeitsquelle im Falle einer Bremsung bei Vorhandensein eines Ausfalls der Hochdruckquelle abzutrennen, wobei dieses fünfte Ventilmittel eine Verbindung (6, 17) durch den Stößel (5) hindurch zwischen der ersten Kammer und der Niederdruckquelle (16) steuert, und diese Verbindung bei Fehlen einer Einwirkung auf das Bremspedal offen ist.

3. Vorrichtung nach Anspruch 2, dadurch gekennzeichnet, daß das vierte (25) und das fünfte (7) Ventilmittel aus von Nadeln gesteuerten Kugelventilen besteht, wobei diese Ventile in das Kolbenmittel beziehungsweise den Stößel eingebaut sind und ein Druck auf das Bremspedal das Ventil (25) öffnet und das Ventil (7) schließt.

4. Vorrichtung nach Anspruch 3, dadurch gekennzeichnet, daß das Ventil (7) bei Fehlen eines Drucks auf das Bremspedal durch eine Nadel geöffnet wird, die sich dann auf einem festen Stift (12) abstützt, wobei das andere Ende der Nadel die Kugel des Ventils (7) von ihrem Sitz wegschiebt.

5. Vorrichtung nach einem der vorausgehenden Ansprüche, dadurch gekennzeichnet, daß das dritte Ventilmittel aus einer Kugel (27) besteht, die auf einem beweglichen Kern (26) zwischen einer ersten Stellung angebracht ist, in der diese Kugel einen Kanal (28) verschließt, der in einen Schieber (24) gebohrt ist, der sich in einem Mantel (23) bewegt, welcher einen Teil des Kolbenmittels (20) bildet, wobei dieser Kanal den Bremskreis (29) und die erste Kammer (11) selektiv in Verbindung bringt, und einer zweiten Stellung, in der diese Kugel vom Kanal weggeschoben wird, um den Übergang eines Teils der Flüssigkeit aus der ersten Kammer (11) in den Bremskreis (29) im Falle einer Bremsung bei Vorhandensein eines Ausfalls der Hochdruckquelle zu gestatten.

6. Vorrichtung nach einem der vorausgehenden Ansprüche, dadurch gekennzeichnet, daß das Kolbenmittel (20) eine Ringmanschette (31) trägt, die in der Bohrung des Gehäuses eine Dichtung bildet, wobei diese Ringmanschette den Durchfluß der Flüssigkeit zwischen der Wand der Bohrung und der Ringmanschette gestattet, wenn Flüssigkeit aus der Kammer (11) gestoßen wird, um im Falle einer Bremsung bei Vorhandensein eines Ausfalls der Hochdruckquelle in den Bremskreis (29) zu gelangen, wobei diese Bremsflüssigkeitsverlagerung dann zu derjenigen hinzukommt, die durch die Öffnung des dritten Ventilmittels (27) bestimmt ist.

7. Vorrichtung nach einem der vorausgehenden Ansprüche, dadurch gekennzeichnet, daß das zweite Ventilmittel ein Rückschlagventil (36) ist, das so ausgerichtet ist, daß es ein Rückströmen der in der zweiten Kammer enthaltenen Flüssigkeit zu der Hochdruckquelle hin verhindert.

8. Vorrichtung nach einem der vorausgehenden Ansprüche, dadurch gekennzeichnet, daß das erste Ventilmittel aus einem Ventil (38) besteht, das eine Verbindung zwischen der ersten Kammer (11) und einer Niederdruck-Flüssigkeitsquelle (40) steuert, wobei sich dieses Ventil bei Ausfall der Hochdruck-Flüssigkeitsquelle schließt.

9. Vorrichtung nach einem der vorausgehenden Ansprüche, dadurch gekennzeichnet, daß eine durch Zusammendrückung wirkende Feder (43) in die zweite Kammer (33) eingesetzt ist, wobei sich die Feder (43) der Einwirkung der Feder (21) auf das Kolbenmittel widersetzt und die Feder (21) eine höhere Steife als diejenige der Feder (43) aufweist.

10. Vorrichtung nach einem der vorausgehenden Ansprüche, dadurch gekennzeichnet, daß eine durch Zusammendrückung wirkende Feder (30) bestrebt ist, den einen Teil des Kolbenmittels (20) bildenden Schieber (24) aus dem Mantel (23) herauszudrücken.

11. Vorrichtung nach einem der Ansprüche 9 und 10, dadurch gekennzeichnet, daß das Ende des Stößels (5) von einer Kappe (8) überragt wird, auf welcher ein Fuß der Feder (21) aufliegt, wobei eine Feder (9) von einer höheren Steife als die der Feder (21) in dieser Kappe eingesetzt ist, um die Kappe vom Ende des Stößels (5) abstehend zu belasten.

FIG.1

EP 0 288 349 B1

FIG_2

EP 0 288 349 B1